# EUROPEAN PATENT APPLICATION

(11) **EP 3 477 416 A1**
(43) Date of publication of application: **01.05.2019**
(21) Application number: 17198965.0
(22) Date of filing: 27.10.2017
(51) Int. Cl.: G05D 23/13

(54) **AN APPARATUS AND METHOD FOR DELIVERING A LIQUID AT A TARGET TEMPERATURE**

(71) Applicant: Vestel Elektronik Sanayi ve Ticaret A.S., 45030 Manisa (TR)
(72) Inventor: SARIARSLAN, Muhammet Kürsat, 45030 Manisa (TR)
(74) Representative: Whitfield, Ian

(57) **Abstract**

An apparatus (1) is provided for delivering a liquid (3) at a target temperature. The apparatus (1) includes: two or more liquid storage tanks (2a-d) connected to a common outlet (7). Each liquid storage tank (2a-d) is for storing a liquid (3) and includes a heater (4a-d) that is controllable for heating liquid (3) stored in the liquid storage tank (2a-d) to different temperatures. Each liquid storage tank (2a-d) includes a valve (9a-d) for providing control of flow of the liquid (3) out of the liquid storage tank (2a-d) and to the common outlet (7). The apparatus (1) includes a controller (12) configured to adjust a degree of opening of the valve (9a-d) of each liquid storage tank (2a-d) in order to deliver liquid (3) to or out of the common outlet (7) at a target temperature.

## Description

### Technical Field

The present disclosure relates to an apparatus and method for delivering a liquid at a target temperature.

### Background

Domestically and industrially, delivering liquid from a tap (or faucet) at a target temperature typically requires a user to mix a continuous supply of cold liquid with a continuous supply of hot liquid until the user detects that the target temperature is reached. The liquid that is supplied to the tap before the target temperature is reached is normally discarded by the user. Therefore, this mixing operation often results in a large amount of liquid being wasted. In addition, it can take some time before the liquid delivered from the tap is at the desired or target temperature.

### Summary

According to a first aspect disclosed herein, there is provided an apparatus for delivering a liquid at a target temperature, the apparatus comprising: two or more liquid storage tanks connected to a common outlet, each liquid storage tank comprising: a heater that is controllable for heating liquid stored in the liquid storage tank to different temperatures; and a valve for providing control of flow of the liquid out of the liquid storage tank and to the common outlet; and a controller configured to adjust a degree of opening of the valve of each liquid storage tank in order to deliver liquid to or out of the common outlet at a target temperature.

Using a controller to adjust the openings of the valves to reach the target temperature allows for a reduction in the time between liquid flowing out of the outlet and the temperature of the liquid reaching the target temperature. This decrease in time results in less liquid flowing out of the outlet at a temperature that is not the target temperature and thus results in less liquid being wasted. Liquid at a user's target temperature is effectively and practically available on demand.

In an example, the apparatus comprises data storage that stores information on associations between the degree of opening of the valves and the temperature of the liquid flowing to or out of the common outlet.

In an example, the controller is configured to obtain the degree of opening of the valves corresponding to the target temperature by searching the data storage.

In an example, the apparatus comprises a temperature sensor constructed and arranged to obtain a measure of a temperature of liquid flowing to or out of the common outlet.

In an example, the controller is configured to compare a temperature of the liquid flowing to or out of the common outlet with the target temperature selected, and adjust the degree of opening of the valves of the liquid storage tanks in order to deliver liquid to or out of the common outlet at the target temperature.

According to a second aspect disclosed herein, there is provided a method for delivering a liquid at a target temperature, the method comprising: receiving a target temperature; adjusting a degree of opening of two or more valves that each provide control of flow of a liquid out of a liquid storage tank to a common outlet in order to deliver liquid to or out of the common outlet at the target temperature, wherein each liquid storage tank comprises a heater that is controllable for heating liquid stored in the liquid storage tank to different temperatures.

In an example, the method comprises obtaining the degree of opening of the valves corresponding to the target temperature by searching information on associations between the degree of opening of the valves and the temperature of the liquid flowing to or out of the common outlet stored on a data storage.

In an example, the method comprises obtaining a measure of a temperature of liquid flowing to or out of the common outlet.

In an example, the method comprises comparing a temperature of the liquid flowing to or out of the common outlet with the target temperature selected; and adjusting the degree of opening of the valves of the liquid storage tanks in order to deliver liquid to or out of the common outlet at the target temperature.

### Brief Description of the Drawing

To assist understanding of the present disclosure and to show how embodiments may be put into effect, reference is made by way of example to the accompanying drawing in which:

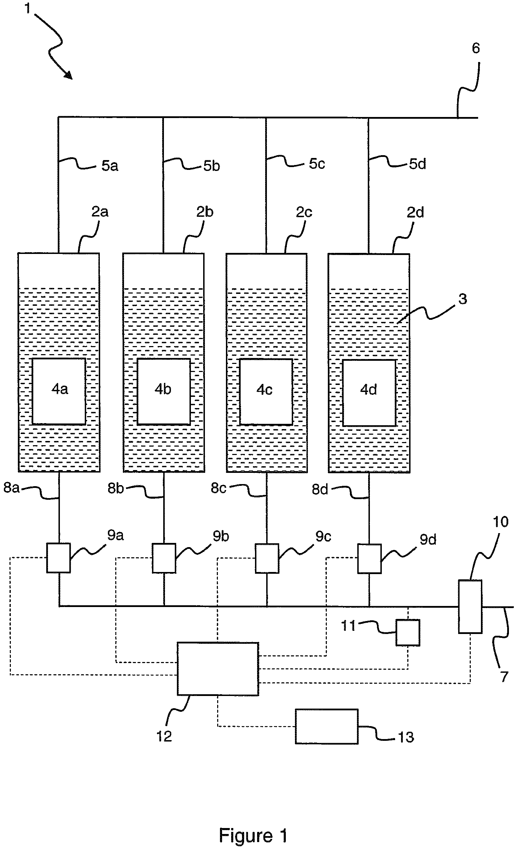

Figure 1 shows a schematic drawing of an apparatus for delivering a liquid at a target temperature.

### Detailed Description

Domestically and industrially, delivering liquid from a tap (or faucet) at a target temperature typically requires a user to mix a continuous supply of cold liquid with a continuous supply of hot liquid until the user detects that the target temperature is reached. The liquid that is supplied to the tap before the target temperature is reached is normally discarded by the user. Therefore, this mixing operation often results in a large amount of liquid being wasted. In addition, it can take some time before the liquid delivered from the tap is at the desired or target temperature.

For example, in a plumbing system in a house, a user will run a domestic tap, such as a single mixer tap, for a period of time whilst adjusting the tap to deliver water out of the tap at a target temperature. The water that is delivered to the basin or bath, etc. before the target temperature is reached is usually allowed to drain away down the plughole.

Figure 1 shows schematically an example of an apparatus 1 for delivering a liquid at a target temperature selected by a user. In this example, the apparatus 1 is provided inside of or otherwise associated with a house. In another example, the apparatus may be provided inside of or associated with another building, such as a hotel or a factory etc. In this example, the liquid is water but in other examples the liquid may be any other liquid that a user desires to control the temperature of, such as cooking oil or a beverage.

The apparatus 1 includes a plurality of liquid storage tanks 2a-d. Each of the liquid storage tanks 2a-d is a vessel that is constructed and arranged to define a reservoir that is suitable for storing a liquid 3. In this example, four liquid storage tanks 2a-d are provided. Therefore, the apparatus 1 includes a first liquid storage tank 2a, a second liquid storage tank 2b, a third liquid storage tank 2c, and a fourth liquid storage tank 2d. The apparatus 1 may include more or fewer liquid storage tanks 2a-d so long as at least two liquid storage tanks 2a-d are provided so that liquid 3 flowing from the liquid storage tanks can be mixed together to deliver liquid 3 at a user-selected target temperature, as will be explained.

In this specific example, each of the liquid storage tanks 2a-d has a cylindrical shape and has a circular cross-sectional shape. The liquid storage tanks 2a-d are also the same size as one another. In another example, the liquid storage tanks 2a-d may have another shape, so long as the shape defines a reservoir for storing a liquid 3. Indeed, one or more of the liquid storage tanks 2a-d may have a different size and/or shape to another of the liquid storage tanks 2a-d, depending on the relative volumes of the reservoirs of the liquids storage tanks 2a-d that are required. In Figure 1, the liquid storage tanks 2a-d are shown adjacent one another. However, in another example, the liquid storage tanks 2a-d may be arranged in any particular configuration.

In this example, a heater 4a-d is provided within each liquid storage tank 2a-d. In another example, a heater is provided on the outside of each liquid storage tank 2a-d. The heater 4a-d in each liquid storage tank 2a-d is controllable for heating liquid 3 stored in the liquid storage tank 2a-d to a liquid storage temperature and maintaining the liquid 3 at the liquid storage temperature. In this example, the liquid storage temperature of each liquid storage tank 2a-d is different. The liquid storage temperatures can range from a relatively low temperature such as 20°C to a relatively high temperature such as 70°C. Each heater 4a-d may be any type of heater that can heat a liquid such as water. For example, each heater may be a resistive heating element (e.g. an immersion heater). Each liquid storage tank 2a-d is thermally insulated in order to reduce heat losses and therefore the heating that is required to maintain the temperature of the liquid 3 held within the liquid storage tanks 2a-d at the liquid storage temperature.

The size of each liquid storage tank 2a-d may be at least partially dependent on the temperature of the liquid 3 held within the tank 2a-d. For example, in some applications such as supplying hot water to a house, it is unlikely that a user would require a large volume of very hot liquid and therefore a liquid storage tank storing very hot liquid, e.g. at 70°C, may be smaller than a liquid storage tank storing liquid at a more moderate temperature such as 40°C.

The liquid storage tanks 2a-d are each connected to a supply of liquid 3. In this example, the supply of liquid 3 is a mains water connection. Each of the liquid storage tanks 2a-d is attached to a respective inlet conduit 5a-d that is connected to the mains water connection. In this example, each of the liquid storage tanks 2a-d is connected to a common inlet conduit 6. Specifically, each of the inlet conduits 5a-d connects to the common inlet conduit 6. The inlet conduits 5a-d and the common inlet conduit 6 may be any type of channel that is suitable for transporting a liquid, such as a pipe or a duct.

The liquid storage tanks 2a-d each connected to a common outlet conduit 7 so that liquid can be discharged out of the reservoir of each liquid storage tank 2a-d. In this example, each of the liquid storage tanks 2a-d is attached to a respective outlet conduit 8a-d that connects the liquid storage tank 2a-d to the common outlet conduit 7. The common outlet conduit 7 and the outlet conduits 8a-d may be any type of channel that is suitable for transporting a liquid, such as a pipe or a duct.

A valve 9a-d is provided on each of the outlet conduits 8a-d for controlling flow of the liquid 3 out of the liquid storage tanks 2a-d and to the common outlet conduit 7. Each of the valves 9a-d may be any type of valve that is suitable for controlling flow of a liquid, such as globe valve, a diaphragm valve, a ball valve or a butterfly valve. Increasing the opening of a valve 9a-d begins or increases the flow rate of the liquid 3 out of the respective liquid storage tank 2a-d and through the respective outlet conduit 8a-d. Decreasing the opening of a valve 9a-d decreases and ultimately stops the flow rate of the liquid 3 out of the respective liquid storage tank 2a-d and through the respective outlet conduit 8a-d.

A common outlet conduit valve is provided on the common outlet conduit 7 for controlling flow of the liquid 3 out of the common outlet conduit 7. The common outlet conduit valve may be any type of valve that is suitable for allowing and preventing flow of a liquid. In this example, the common outlet valve is a domestic tap (or faucet) 10. Opening the tap 10 allows for flow of the liquid 3 from the liquid storage tanks 2a-d and through the common outlet conduit 7 to begin. Closing the tap 10 ends the flow of the liquid 3 from the liquid storage tank 2a-d and through the common outlet conduit 7. A user can therefore open and close the tap 10 to allow and prevent flow of the liquid 3 through and out of the common outlet conduit 7.

The tap 10 includes a user input device that allows a user to select a target or desired temperature of the liquid flowing out of the common outlet conduit 7. In this example, the user input device is a touch screen. In another example, the user input device may be another way of specifying a target temperature, such as another electronic device, a dial or the relative position or rotation of a part of the tap 10 such as the handle.

In this example, the apparatus 1 includes a temperature sensor 11 that is constructed and arranged to obtain a measure of the temperature of liquid flowing through the common outlet conduit 7.

The apparatus 1 also includes a controller 12, which may be a processor or the like, for controlling the temperature of the liquid 3 flowing out of the common outlet 7. In this example, the controller 12 is connected to the valves 9a-d, the tap 10 and the temperature sensor 11.

In this example, a data storage 13 is provided. The data storage 13 is connected to the controller 12. The data storage 13 stores information on associations between the degree of opening of each of the valves 9a-d and the resulting temperature of the liquid 3 flowing out of the common outlet conduit 7. The data storage 13 may store this information in, for example, a look-up table. The information may be factory set by a manufacturer of the apparatus 1.

The controller 12 is configured to adjust the opening of the valves 9a-d of the liquid storage tanks 2a-d in order to deliver liquid 3 to or out of the common outlet conduit 7 at a target temperature selected by a user. In this example, the controller 12 is configured to adjust the opening of the valves 9a-d by searching the data storage 13 for the degree of opening of the valves 9a-d that corresponds to the target temperature selected by the user. Therefore, when a user selects a target temperature of the liquid 3 flowing out the common outlet conduit 7, for example by moving the handle of the tap 10 to a particular position, the controller 12 automatically adjusts the degree of opening of the valves 9a-d to provide liquid 3 at that temperature.

In an example, the controller 12 is also configured to obtain a measure of the temperature of the liquid 3 flowing out of the common outlet 7 from the temperature sensor 11 and compare the received temperature of the liquid 3 flowing out of the common outlet 7 with a target temperature selected by a user. The controller 12 is also configured to adjust the opening of the valves 9a-d of the liquid storage tanks 2a-d in order to adjust the temperature of the liquid 3 flowing out the common outlet 7 so as to deliver liquid 3 at the target temperature selected by the user. Therefore, if the temperature of the liquid 3 differs from the target temperature, the controller 12 adjusts the degree of opening of the valves 9a-d until the target temperature is reached.

An example of use of the apparatus 1 shown in Figure 1 will now be described.

In this specific example, the liquid storage temperature of the first liquid storage tank 2a is 20°C, the liquid storage temperature of the second liquid storage tank 2b is 30°C, the liquid storage temperature of the third liquid storage tank 2c is 50°C and the liquid storage temperature of the fourth liquid storage tank 2d is 70°C.

Initially, the tap 10 is fully closed so no liquid 3 is flowing out of the common outlet conduit 7. The valves 9a-d are also all fully closed.

A user, wanting to activate a flow of the liquid 3 through the common outlet conduit 7 at a target temperature of 40°C, inputs "40°C" into the user input device of the tap 10. The user then opens the tap 10.

The controller 12 receives the target temperature from the user input device of the tap 10 and then searches the look-up table stored in the data storage 13 for a corresponding degree of opening of each of the valves 9a-d that will provide a flow of liquid 3 at the target temperature.

The controller 12 obtains information specifying that the valve 9b of the second liquid storage tank 2b, which is storing liquid at 30°C, and the valve 9c of the third liquid storage tank 2c, which is storing liquid at 50°C, should be opened to a degree of 50%. The controller 12 also obtains information specifying that the valve 9a of the first liquid storage tank 2a and the valve 9d of the fourth liquid storage tank 2d should remain fully closed.

The controller 12 opens the valves 9b, 9c of the second and third liquid storage tanks 2b, 2c. Liquid 3 then flows from second and third liquid storage tanks 2b, 2c and out of the common outlet conduit 7 at the target temperature of 40°C.

The liquid 3 that flows out of the second and third liquid storage tanks 2b, 2c is subsequently replaced by liquid 3 from the mains water connection through the common inlet conduit 6 and is then heated to the liquid storage temperature by the heaters 4b, 4c.

The controller 12 periodically obtains a measure of the temperature of the liquid 3 from the temperature sensor 11 as liquid 3 flows through the common outlet conduit 7. If the controller 12 senses that the temperature of the liquid 3 has deviated from the target temperature by more than a predetermined threshold difference then the controller 12 adjusts the degree of opening of the open valves 9b, 9c to compensate. For example, if the controller 12 detects that the temperature of the liquid 3 is 38°C rather than 40°C, the controller 12 increases the degree of the opening of the valve 9c of the third liquid storage tank 2c and correspondingly decreases the opening of the valve 9b of the second liquid storage tank 2b until the temperature of the liquid 3 obtained from the temperature sensor 11 is approximately equal to the target temperature. The temperature of the liquid 3 sensed by the temperature sensor 11 may differ from the expected temperature stored in the data storage 13 due to the ambient temperature of the apparatus 1. The ambient temperature may affect the temperature of the liquid 3 as it flows from the liquid storage tanks 2a-d towards the temperature sensor 11, depending on for example the rate of heat loss as the liquid 3 flows.

This arrangement has a number of advantages. First, the time between a user opening the tap and the temperature of the liquid reaching the target temperature is greatly reduced, which results in less liquid flowing out of the common outlet conduit at a temperature that is not the target temperature and thus results in less liquid being wasted. Liquid at a target temperature is effectively available on demand. Secondly, safety is improved because liquid flowing out of the common outlet conduit will not be too hot (unless the target temperature is set to a very high temperature). Thirdly, storing liquid in a number of different liquid storage tanks and at a number of different temperatures means that unlike in typical systems, such as a domestic hot water system, there is no requirement to heat a large store of liquid to a high temperature, which can reduce overall heat losses and therefore improve the efficiency of power consumption in heating the liquid. In addition, in usual arrangements, when liquid is drawn from the single liquid storage tank and replaced with cold liquid, the temperature of the whole store of liquid in the single tank is reduced and thus the whole store of liquid must be reheated. However, with this arrangement, only the liquid of a liquid storage tank from which liquid has been drawn needs to be reheated. Therefore, less liquid is reheated after use of the tap. Accordingly, this arrangement is more energy efficient.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus for delivering a liquid at a target temperature, the apparatus comprising:
two or more liquid storage tanks connected to a common outlet, each liquid storage tank comprising: a heater that is controllable for heating liquid stored in the liquid storage tank to different temperatures; and a valve for providing control of flow of the liquid out of the liquid storage tank and to the common outlet; and
a controller configured to adjust a degree of opening of the valve of each liquid storage tank in order to deliver liquid to or out of the common outlet at a target temperature.

2. An apparatus according to claim 1, comprising data storage that stores information on associations between the degree of opening of the valves and the temperature of the liquid flowing to or out of the common outlet.

3. An apparatus according to claim 2, wherein the controller is configured to obtain the degree of opening of the valves corresponding to the target temperature by searching the data storage.

4. An apparatus according to any preceding claim, comprising a temperature sensor constructed and arranged to obtain a measure of a temperature of liquid flowing to or out of the common outlet.

5. An apparatus according to claim 4, wherein the controller is configured to compare a temperature of the liquid flowing to or out of the common outlet with the target temperature selected, and adjust the degree of opening of the valves of the liquid storage tanks in order to deliver liquid to or out of the common outlet at the target temperature.

6. A method for delivering a liquid at a target temperature, the method comprising:
receiving a target temperature; and
adjusting a degree of opening of two or more valves that each provide control of flow of a liquid out of a liquid storage tank to a common outlet in order to deliver liquid to or out of the common outlet at the target temperature,
wherein each liquid storage tank comprises a heater that is controllable for heating liquid stored in the liquid storage tank to different temperatures.

7. A method according to claim 6, comprising obtaining the degree of opening of the valves corresponding to the target temperature by searching information on associations between the degree of opening of the valves and the temperature of the liquid flowing to or out of the common outlet stored on a data storage.

8. A method according to claim 6 or claim 7, comprising obtaining a measure of a temperature of liquid flowing to or out of the common outlet.

9. A method according to claim 8, comprising comparing a temperature of the liquid flowing to or out of the common outlet with the target temperature selected; and adjusting the degree of opening of the valves of the liquid storage tanks in order to deliver liquid to or out of the common outlet at the target temperature.
